(19) **Europäisches Patentamt / European Patent Office / Office européen des brevets**

(11) **EP 3 146 501 B1**

(12) **EUROPEAN PATENT SPECIFICATION**

(45) Date of publication and mention
of the grant of the patent:
**09.09.2020 Bulletin 2020/37**

(21) Application number: **15796572.4**

(22) Date of filing: **19.05.2015**

(51) Int Cl.:
*G06T 5/50* (2006.01)   *H01J 37/26* (2006.01)
*G01N 23/04* (2018.01)   *G02B 21/36* (2006.01)
*G02B 21/12* (2006.01)   *G02B 21/14* (2006.01)
*G02B 27/58* (2006.01)   *G06T 19/20* (2011.01)
*G06T 7/11* (2017.01)   *H04N 5/225* (2006.01)

(86) International application number:
**PCT/US2015/031645**

(87) International publication number:
**WO 2015/179452 (26.11.2015 Gazette 2015/47)**

(54) **FOURIER PTYCHOGRAPHIC MICROSCOPY WITH MULTIPLEXED ILLUMINATION**

PTYCHOGRAFISCHE FOURIER-MIKROSKOPIE MIT MULTIPLEX-BELEUCHTUNG

MICROSCOPIE PTYCHOGRAPHIQUE DE FOURIER AYANT UN ÉCLAIRAGE MULTIPLEXÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.05.2014 US 201462000520 P**

(43) Date of publication of application:
**29.03.2017 Bulletin 2017/13**

(73) Proprietor: **The Regents of the University of
California**
**Oakland, CA 94607-5200 (US)**

(72) Inventors:
• **WALLER, Laura**
  **Berkeley, California 94720 (US)**
• **TIAN, Lei**
  **Boston, MA 02215 (US)**

(74) Representative: **Richards, John et al**
**Ladas & Parry LLP**
**Temple Chambers**
**3-7 Temple Avenue**
**London EC4Y 0DA (GB)**

(56) References cited:
WO-A1-2014/018584   WO-A1-2016/090331
US-A1- 2010 135 547   US-A1- 2013 222 547
US-A1- 2014 118 529   US-B1- 8 624 968

• LEI TIAN ET AL: "3D differential phase-contrast microscopy with computational illumination using an LED array", OPTICS LETTERS, vol. 39, no. 5, 28 February 2014 (2014-02-28), page 1326, XP055431827, ISSN: 0146-9592, DOI: 10.1364/OL.39.001326
• SIYUAN DONG ET AL: "Spectral multiplexing and coherent-state decomposition in Fourier ptychographic imaging", BIOMEDICAL OPTICS EXPRESS, vol. 5, no. 6, 9 May 2014 (2014-05-09), page 1757, XP055431311, United States ISSN: 2156-7085, DOI: 10.1364/BOE.5.001757
• GUOAN ZHENG ET AL: "Microscopy refocusing and dark-field imaging by using a simple LED array", OPTICS LETTERS, OPTICAL SOCIETY OF AMERICA, vol. 36, no. 20, 5 October 2011 (2011-10-05), pages 3987-3989, XP001570540, ISSN: 0146-9592, DOI: 10.1364/OL.36.003987 [retrieved on 2011-10-05]
• XIAOZE OU ET AL: "Embedded pupil function recovery for Fourier ptychographic microscopy", OPTICS EXPRESS, vol. 22, no. 5, 24 February 2014 (2014-02-24), page 4960, XP055431555, ISSN: 2161-2072, DOI: 10.1364/OE.22.004960

**Description**

This application claims priority to, and the benefit of, U.S. provisional patent application serial number 62/000,520 filed on May 19, 2014.

BACKGROUND

1. Technical Field

The present technology pertains generally to optical imaging and more particularly to a brightfield microscope with a programmable LED light source, camera and processor for Fourier ptychographic microscopy with multiplexed illumination for fast, wide field of view, high resolution imaging.

2. Background

For centuries, microscopes have had to trade field of view (FOV) for resolution. This originates from the fact that aberrations grow approximately linearly with FOV, thus space- bandwidth product (SBP) is constant across different magnifications. Recently, a new computational imaging technique, termed Fourier ptychographic microscopy (FPM), circumvents this limit by capturing images from many different illumination angles. FPM recovers gigapixel-scale intensity and phase images having both wide FOV and high resolution, which previously were mutually exclusive. This method has enormous potential for revolutionizing biomedical microscopy. The FPM system has already found use for high-throughput digital pathology. However, FPM has been limited to fixed (immobile) biological samples, since image acquisitions require several minutes. Given that a majority of biological microscopy involves live samples, the slow acquisition speed of FPM is a major limitation. Sub-cellular features in live samples are changing rapidly, which creates motion blur if data is not captured quickly.

In vitro microscopy is crucial for the study of physiological phenomena in cells. For many applications, such as drug discovery, live cell mass profiling, cancer cell biology and stem cell research, the goal is to efficiently identify and isolate events of interest. As these events often happen rarely, automated high throughput and high content imaging is highly desirable in order to provide statistically and biologically meaningful analysis. Thus, an ideal technique should be able to image and analyze tens of thousands of cells simultaneously across a wide field of view (FOV). Furthermore, to observe dynamical processes across various spatial and temporal scales, both high spatial and high temporal resolution are of equal importance. Existing high throughput imaging techniques cannot meet the space-bandwidth-time product required for in vitro applications.

The main limitation of FPM for in vitro applications is the long acquisition time that causes motion blur. Not only are hundreds of images captured for each reconstruction, but also long exposure times are needed due to the large intensity falloff at high angles. In addition, the large dynamic range differences between brightfield and dark field images (typically 2-4 orders of magnitude) caused previous works to employ a multi-image High Dynamic Range (HDR) capture method, further increasing acquisition time. Accordingly, there is a need for imaging systems and methods that will provide fast acquisition speeds by several orders of magnitude by reducing both capture time for each image and total number of images required. The present technology satisfies these needs as well as others and is generally an improvement over the art.

The reference "3D differential phase-contrast microscopy with computational illumination using an LED array", Optics Letter; Vol. 39, No 5, 28 February 2014 (2014-02-28), page 1326, ISSN 0146-9592, DOI: 10.1364/OL.39.001326, by Lei Tian et al. describes 3D differential phase-contrast (DPC) microscopy, based on computational illumination with a programmable LED array. By capturing intensity images with various illumination angles generated by sequentially patterning an LED array source, one digitally refocuses images through various depths via light field processing. The intensity differences from images taken at complementary illumination angles are then used to generate DPC images, which are related to the gradient of phase. The proposed method achieves 3D DPC with simple, inexpensive optics and no moving parts.

The reference "Spectral Multiplexing and Coherent-State Decomposition in Fourier Ptychographic Imaging"; Biomedical Optics Express, Vol. 5, No. 6, 9, May 2014, page 1757, USA, ISSN 2156-7085, DOI: 10.1364/VOE.5.001757, by Siyuan Dong et Al. a microscopy imaging technique, termed state-multiplexed Fourier ptychography (FP), for information multiplexing and coherent-state decomposition. Similar to a typical Fourier ptychographic setting, an array of light sources illuminates the sample from different incident angles and corresponding low-resolution images are acquired using a monochromatic camera. In the reported technique, however, multiple light sources are lit up simultaneously for information multiplexing, and the acquired images thus represent incoherent summations of the sample transmission profiles corresponding to different coherent states. It is shown that, by using the state-multiplexed FP recovery routine, one can decompose the incoherent mixture of the FP acquisitions to recover a high-resolution sample image. It is also shown that, color-multiplexed imaging can be performed by simultaneously turning on R/G/B LEDs for data acquisition. The reported technique may provide a solution for handling the partially coherent effect of light sources used in Fourier ptychographic imaging platforms. It can also be used to replace spectral filter, gratings or other optical components for spectral multiplexing and demultiplexing. With the availability of cost-effective broadband LEDs, the reported technique may open up exciting opportunities for computational multispectral imaging.

BRIEF SUMMARY

The present technology is based on Fourier ptychographic microscopy (FPM), which is a new computational imaging technique that overcomes the physical space-bandwidth product (SBP) limit. In traditional microscopy, one must choose between large FOV or high resolution, however, FPM achieves both by trading off temporal resolution.

The apparatus and methods provide wide field, high resolution imaging on the LED array microscope (named Fourier ptychography) with multiplexed illumination coding strategies that both reduce the acquisition time and the data size required by more than an order of magnitude while achieving the same imaging performance. The result achieves high resolution across large field of view in real-time imaging.

A major advantage of FPM is its ability to capture high SBP images in a commercial microscope with no moving parts. The microscope has a programmable LED array, optical imaging elements, a camera and an image processor. The image processor may also have programming that actuates the LED lights in the array and a display.

A sample is placed on the microscope platform for examination. Illumination angles are scanned sequentially with illumination from the programmable LED array, while taking an image at each angle using a low magnification objective having a wide FOV. Tilted illumination shifts the sample's spectrum in Fourier space, with the objective aperture selecting out different regions. Thus, by scanning through different angles, information about many regions of the Fourier space are captured. Even though the spatial resolution of each measurement may be poor, the images collected with high illumination angles (dark field) contain sub-resolution information. It is possible to computationally combine the information in post-processing to achieve resolution beyond the diffraction limit of the objective up to the sum of the objective and illumination numerical apertures (NA).

In order to reach the goal of sub-second capture times, the capture strategy exploits the redundancy in FPM data by using multiplexed illumination schemes which require significantly fewer images. The redundancy arises because of a requirement that the Fourier space area for each neighboring LED be overlapped by at least 60% in order to ensure algorithm convergence. This means that approximately ten times more data must be captured for reconstruction than is needed to reconstruct when using a sequential FPM strategy. The angle-multiplexing scheme instead turns on multiple LEDs simultaneously for each measurement, allowing coverage of multiple Fourier space regions. Without eliminating the overlap, the full Fourier space is covered with fewer measurements, meaning that it is possible to capture faster sample dynamics and greatly reduce the data management burden.

The methods employ a random, non-random or hybrid coded illumination across both brightfield and dark field regions along with corresponding reconstruction algorithms. The hybrid capture scheme, termed Fast FPM, first captures 4 DPC images (top, bottom, left, right half-circles), then uses random multiplexing with 8 LEDs to fill in the dark field Fourier space region. Asymmetric illumination-based differential phase contrast (DPC) provides a means for recovering quantitative phase and intensity images out to two times the objective NA with only 4 images. Therefore, there is no need to individually scan the brightfield LEDs.

According to one aspect of the technology, a microscope apparatus is provided with a programmable LED array that allows multiplexed illumination schemes and Fourier ptychographic microscopy with fast acquisition times.

According to another aspect of the technology, imaging methods are provided with random, non-random and combined illumination schemes and image reconstructions that permit high resolution 2D and 3D imaging of cells and cell processes.

A further aspect of the technology is to provide stain-free and label-free imaging techniques that are easy to use, non-invasive and non-toxic.

Further objects and aspects of the technology will be brought out in the following portions of the specification, wherein the detailed description is for the purpose of fully disclosing preferred embodiments of the technology without placing limitations thereon.

BRIEF DESCRIPTION OF THE SEVERAL VIEWS

OF THE DRAWINGS

The technology described herein will be more fully understood by reference to the following drawing which is for illustrative purposes only:

FIG. 1 is a schematic flow diagram of a Fourier ptychographic microscope apparatus with multiplexed illumination with a programmable LED array according to one embodiment of the technology.

FIG. 2 is a schematic flow diagram of a method of Fourier ptychographic microscopy according to one embodiment of the technology.

DETAILED DESCRIPTION

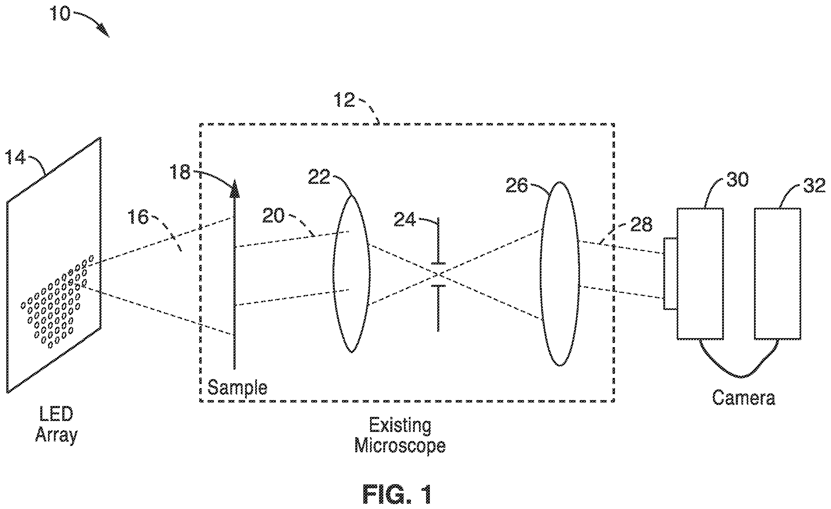

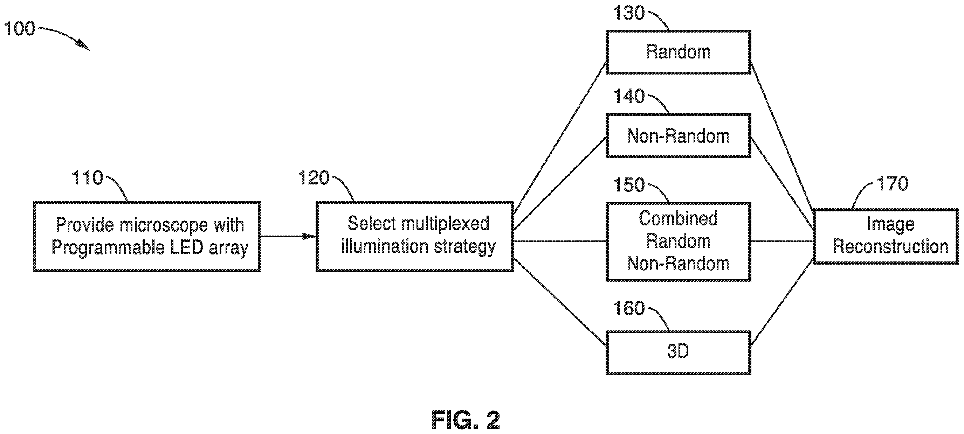

Referring more specifically to the drawings, for illustrative purposes, embodiments of the apparatus and methods for wide field of view, high resolution imaging with Fourier ptychographic microscopy using multiplexed illumination are generally shown. One embodiment of the technology is described generally in FIG. 1 and FIG. 2 to illustrate the apparatus and methods. It will be appreciated that the methods may vary as to the specific steps and sequence and the apparatus may vary as to structural details without departing from the basic concepts as disclosed herein. The method steps are merely exemplary of the order that these steps may occur. The steps may occur in any order that is desired, such that it still performs the goals of the claimed technology.

Turning now to FIG. 1, one apparatus 10 for Fourier ptychographic microscopy is schematically shown. The apparatus 10 has a conventional brightfield microscope 12 with a programmable LED array 14 as a light source. This simple, inexpensive hardware modification allows deliberate patterning of the illumination 16 at the Fourier plane 24 of the sample 18 (assuming Kohler geometry). Light 20 from sample 18 is directed through the optical lenses 22, 26 of the brightfield microscope and light 28 is received by imaging device 30 such as a camera. The image data obtained from imaging device 30 may be transferred to a computing device 32 for processing and display.

The LED array 14 preferably includes a programmable controller that is configured to illuminate one or more of the light emitting diodes of the array over time in a designated pattern and temporal sequence. In one embodiment, control over the LED array 14 is performed by programming on computing device 32.

This method, named Fourier ptychography, enables one to use a low NA objective, having a very large field of view (FoV), but still obtain high resolution across the entire image, resulting in gigapixel images. The aberrations in the imaging system can also be estimated without separate characterization. All of these imaging modalities are achieved in the same optical setup, with no moving parts, simply by choosing the appropriate LEDs of the array to turn on. Accordingly, LED array illumination strategies can be developed to different types of specimens and imaging needs.

One of the limitations of Fourier Ptychography is the large amount of data captured and the long acquisition times required. An image must be collected while scanning through each of the LEDs in the array, leading to hundreds of images in each dataset. This is compounded by the fact that each LED has limited intensity, requiring long exposures. The multiplexed illumination schemes are capable of reducing both acquisition time and the number of images required by orders of magnitude.

Thus, each LED in the array corresponds to the illumination 16 of the sample at a unique angle. Conveniently, the range of illumination angles that can be patterned is much larger than the range of angles that pass through the objective lens set by its numerical aperture (NA). This means that illumination by the central LEDs of the array 14 produces brightfield images, whereas illumination by the outer LEDs that are outside the NA of the objective will produce dark field images.

Alternatively, by sequentially taking a pair of images with either half of the light source 14 on, it is possible to obtain phase derivative measurements by differential phase contrast (DPC). In DPC, quantitative phase is recovered from two images, taken with complementary asymmetric illumination patterns. The difference between the two images is related to the sample's phase derivative along the axis of asymmetry.

Because of the flexible patterning of the LED array 14, it is possible to implement DPC measurements in real-time and along arbitrary axes of asymmetry, without any mechanical parts. Conveniently, DPC only requires hardware changes on the illumination side or on the detection side, thus it can be integrated into existing systems such as endoscopy.

Finally, a full sequential scan of the 2D array of LEDs (angles), while taking 2D images at each angle, captures a 4D dataset similar to a light field or phase space measurement. This enables all the computational processing of light field imaging.

For example, angular information can be traded for depth by using digital refocusing algorithms to get 3D intensity or 3D phase contrast. When the sample is thin, angular information can instead be used to improve resolution by computationally recovering a larger synthetic NA, limited only by the largest illumination angle of the LED array.

Turning now to FIG. 2, one method 100 for Fourier ptychographic microscopy is schematically shown. The methods utilize a conventional microscope at block 110, for example, that has a programmable LED array and any multiplexed illumination for achieving wide field of view, high resolution imaging in Fourier ptychographic microscopy. Fourier ptychography is a computational microscopy technique that achieves gigapixel images with both wide field of view and high resolution in both phase and amplitude. The programmable LED array allows one to flexibly pattern illumination angles without any moving parts. The aberrations in the imaging system can also be estimated without separate characterization. All of these imaging modalities are achieved in the same optical setup simply by choosing the appropriate LEDs to turn on.

The multiplexed illumination strategy is selected at block 120 of FIG. 2. This selection will be influenced by the nature of the specimen that is to be analyzed. For example, if the specimen or component of interest to be viewed is generally static, then a random illumination scheme can be selected at block 120. Similarly, if the specimen is a live cell or group of cells and fast acquisition times are needed then a non-random illumination scheme can be selected and applied. Given that a majority of biological microscopy involves live samples, a slow acquisition speed is a major limitation. Sub-cellular features in live samples are changing rapidly, which creates motion blur if data is not captured quickly. Motion blurs or disappearing features and other artifacts can also be avoided with the proper selection of illumination scheme at block 120.

The strategy that is selected at block 120 may also be influenced by the desired characteristics of the images that are to be produced and the limitations of the hardware that is available. The selection of illumination strategy may be influenced by the desire for three or four dimensional imaging versus two dimensional imaging.

One of the main limitations of conventional ptychography is the large amount of data captured and the long acquisition times required. An image must be collected while scanning through each of the LEDs in the array, leading to hundreds of images in each dataset. This is compounded by the fact that each LED has limited intensity, requiring long exposures. The multiplexed illumination schemes are capable of reducing both acquisition time and the number of images required by orders of magnitude.

The illumination strategy that is selected at block 120 is then implemented and the resulting image data is processed and a final image is reconstructed at block 170. Representative illumination strategies and image processing schemes include: a random scheme at block 130; a non-random scheme at block 140; a combined random and non-random scheme at block 150 and a three dimensional scheme at block 160. Each of these schemes has functional algorithms that produce refined and processed data for reconstruction at block 170.

There are many choices of coding strategies for multiplexed measurements at block 130. By turning on M LEDs for each image, the exposure time can be linearly reduced by a factor of M while maintaining the same photon budget. Since each image covers M times more area of Fourier space, the total number of images may also be able to be reduced by a factor of M. Thus, the possible reduction in total acquisition time is $M^2$. Intuitively, we would like each pattern to turn on LEDs which are far away from each other, such that they represent distinct (non-overlapping) areas of Fourier space. However, we still need overlap across all the images captured, so later coded images should cover the overlapping areas.

At block 130, a general random coding scheme is used where the number of LEDs on is fixed, but their location varies randomly for each captured image, subject to the rule that each LED needs to be used at least once in each dataset, even when the number of images is reduced. Early images that are acquired will have M LED's turn on randomly with uniform probability but LED actuation in later images will exclude those LEDs that have already been activated. This process generates a set of $N_{LED}/M$ patterns which fully cover all LEDs. The process is repeated many times to generate the additional images needed for matching the number of images to the sequential scan. This scheme achieves good mixing of information and balanced coverage of Fourier space for each image.

One embodiment provides a forward model for multiplexed Fourier ptychography as follows: consider a thin sample described by the complex transmission function o(r), where r = (x,y) denotes the lateral coordinates at the sample plane. Each LED generates illumination at the sample that is treated as a (spatially coherent) local plane wave with a unique spatial frequency $k_m = (k_{xm}, k_{ym})$ for LEDs m = 1, $\cdots$, $N_{LED}$, where $N_{LED}$ is the total number of LEDs in the array. The exit wave from the sample is the multiplication of the two: u(r) = o(r)exp(i$k_m \cdot$ r). Thus, the samples spectrum O(k) is shifted to be centered around $k_m = (\sin\theta_{xm}/\lambda, \sin\theta_{ym}/\lambda)$, where $(\theta_{xm}, \theta_{ym})$ define the illumination angle for the mth LED and $\lambda$ is the wavelength.

At the pupil plane, the field corresponding to the Fourier transform of the exit wave $0(k - k_m)$ is low-pass filtered by the pupil function P(k). Therefore, the intensity at the image plane resulting from a single LED illumination (neglecting magnification and noise) is: $i_m(r) = \left| \mathcal{F}_{[O(k-k_m)P(k)]}(r) \right|^2$, where $\mathcal{F}_{[(\cdot)]}(r)$ is the 2D Fourier transform.

For multiplexed images, the sample is illuminated by different sets of LEDs according to a coding scheme. The pth image turns on LEDs with indices $\mathcal{L}_p$ chosen from {1, $\cdots$, $N_{LED}$}. When multiple LEDs are on at once, the illumination must be considered partially coherent, with each LED being mutually incoherent with all others, representing a single coherent mode.

The total intensity of the pth multiplexed image $I_p(r)$ is the sum of intensities from each:

$$I_p(r) = \sum_{m \in \mathcal{L}_p} i_m(r) = \sum_{m \in \mathcal{L}_p} \left| \mathcal{F}_{[O(k-k_m)P(k)]}(r) \right|^2,$$

where the symbol $\in$ denotes that m is an element from the set $\mathcal{L}_p$.

Assuming that the entire multiplexed FP captures a total of $N_{img}$ intensity images, the multiplexing scheme can be described by a $N_{img} \times N_{LED}$ binary coding matrix $\mathbf{A} = [A_{p,m}]$, where the element of the matrix is defined by

$$A_{p,m} = \begin{pmatrix} 1, & m \in \mathcal{L}_p \\ 0, & \text{otherwise} \end{pmatrix}, \quad m = 1, \cdots, N_{LED}, \; p = 1, \cdots, N_{img}.$$

Any coding matrix should satisfy the following general requirements: (1) any column of A should contain at least one non-zero element, meaning that each LED has to be turned on at least once; (2) any row of A should contain at least one non-zero element, excluding the trivial case that no LEDs are turned on in a certain measurement; (3) all the row vectors should be linearly independent with each other, implying that every new multiplexed image is non-redundant.

For the inverse multiplexed illumination case, the algorithm jointly recovers the sample's Fourier space O(k) and the unknown pupil function P(k). The field of view is split into patches that have an area that is on the order of the spatial coherence area of a single LED illumination and incorporates the multi-LED forward model in the optimization procedure. In one embodiment, procedures for background estimation and regularization for tuning noise performance are added to improve robustness.

The least squares formulation for reconstruction is a non-convex optimization problem. The square of the difference between the actual and estimated measurements is minimized, based on the forward model, with an additional term describing the background offset $b_p$:

$$\min_{O(k),P(k),\{b_p\}_{p=1}^{N_{img}}} \sum_{p=1}^{N_{img}} \sum_r \left| I_p(r) - \left( \sum_{m \in \mathcal{L}_p} \left| \mathcal{F}_{[O(k-k_m)P(k)]}(r) \right|^2 + b_p \right) \right|^2.$$

Since there are multiple variables involved in the optimization, the approach optimizes for each sequentially. First, we estimate the background in a single step for each image $\hat{b}_p$ and subtract it to produce the corrected intensity image $\hat{I}_p(r) = I_p(r) - \hat{b}_p$.

Next, an iterative process is started which estimates both the object and the pupil functions simultaneously. We initialize O(k) to be the Fourier transform of the square root of any of the images which contain a brightfield LED, and initialize P(k) to be a binary circle whose radius is determined by the NA. To do this, the auxiliary function is introduced $\Psi_m(k)$ defined as $\Psi_m(k) = 0(k - k_m)P(k)$, which is the field immediately after the pupil from the $m^{th}$-LED illumination. Then, using the corrected intensity image $\hat{I}_p(r)$, we iteratively update $\Psi_m(k)$ for all m, along with the estimates of O(k) and P(k).

The basic structure of the reconstruction algorithm is to update the auxiliary function incrementally from image p = 1 to $N_{img}$ in each iteration, and then to repeat the same process iteratively until the value of the merit function the quantity from the minimization falls below a certain tolerance. Each incremental update consists of the following two steps.

Next, the auxiliary function $\Phi_m^{(i)}(k)$ using the $p^{th}$ intensity image is updated. Let the estimate of the $m^{th}$ auxiliary function in the $i^{th}$ iteration be $\Psi_m^{(i)}(k) = O^{(i)}(k - k_m)P^{(i)}(k).$ First, compute the real space representation of the $m^{th}$ auxiliary function

$$\psi_m^{(i)}(r) = \mathcal{F}_{\left[\Psi_m^{(i)}(k)\right]}(r), \quad m \in \mathcal{L}_p.$$

Then, a projection procedure similar to the Gerchberg-Saxton-Fienup type of update is performed by rescaling the real space auxiliary function by an optimal intensity factor and returning back to the Fourier space representation:

$$\Phi_m^{(i)}(k) = \mathcal{F}^{-1}_{\left[\phi_m^{(i)}(r)\right]}(k) \; \text{with} \; \phi_m^{(i)}(r) = \sqrt{\frac{\hat{I}_p(r)}{\sum_{m \in \mathcal{L}_p} \left|\psi_m^{(i)}(r)\right|^2}} \, \psi_m^{(i)}(r), \quad m \in \mathcal{L}_p.$$

Next, the sample spectrum $0^{(i+1)}(k)$ and the pupil function $P^{(i+1)}(k)$ is updated as follows:

$$O^{(i+1)}(k) = O^{(i)}(k) + \frac{\sum_{m \in \mathcal{L}_p} |P^{(i)}(k+k_m)| [P^{(i)}(k+k_m)]^* [\Phi_m^{(i)}(k+k_m) - O^{(i)}(k)P^{(i)}(k+k_m)]}{|P^{(i)}(k)|_{max} \cdot (\sum_{m \in \mathcal{L}_p} |P^{(i)}(k+k_m)|^2 + \delta_1)}$$

$$P^{(i+1)}(k) = P^{(i)}(k) + \frac{\sum_{m \in \mathcal{L}_p} |O^{(i)}(k-k_m)| [O^{(i)}(k-k_m)]^* [\Phi_m^{(i)}(k) - O^{(i)}(k-k_m)P^{(i)}(k)]}{|O^{(i)}(k)|_{max} \cdot (\sum_{m \in \mathcal{L}_p} |O^{(i)}(k-k_m)|^2 + \delta_2)},$$

where $\delta_1$ and $\delta_2$ are some regularization constants to ensure numerical stability, which is equivalent to an $\ell_2$-norm/Tikhonov regularization on O(k) and P(k). The particular choice of updating step size, determined by the ratio between $|P^{(i)}(k)|$ and its maximum ($|0^{(i)}(k)|$ and its maximum), is shown to be robust.

Since the original optimization above involves P images which contain massive amounts of pixels, an efficient way is to use the incremental method in optimization theory that updates $\Psi_m(k)$ "incrementally" for $m \in \mathcal{L}_p$ in a sequential manner for each p = 1 to $N_{img}$.

For each image $\hat{I}_p(r)$, the framework of alternating projection (also known as projection onto convex sets (POCS)) methods is exploited to estimate the auxiliary functions $\{\Psi_m(k)\}_{m \in \mathcal{L}_p}$ involved in the $p^{th}$ image. Specifically, the estimates of $\{\Psi_m(k)\}_{m \in \mathcal{L}_p}$ associated with the $p^{th}$ image are projected back and forth between the following two sets:

$$\mathcal{C}_{p,1} \triangleq \left\{ \{\Psi_m(k)\}_{m \in \mathcal{L}_p} : \hat{I}_p(r) = \sum_{m \in \mathcal{L}_p} \left| \mathcal{F}_{[\Psi_m(k)]}(r) \right|^2, \forall r \right\}$$

$$\mathcal{C}_{p,2} \triangleq \left\{ \{\Psi_m(k)\}_{m \in \mathcal{L}_p} : \Psi_m(k) = O(k-k_m)P(k), m \in \mathcal{L}_p, O(k), P(k) \in \mathbb{C}, \forall k \right\}.$$

Let the estimate of the $m^{th}$ auxiliary function in the $i^{th}$ iteration be $\Psi_m^{(i)}(k)$, with the $i^{th}$ incremental iteration proceeds sequentially with the image index as $i \equiv p \bmod N_{img}$.

The projection procedures are derived as follows:

1. Projection onto Set $\mathcal{C}_{p,1}$ : By introducing an intermediate variable $\Phi_m^{(i)}(k)$ in the $i^{th}$ iteration, the alternating projection procedure onto the set $\mathcal{C}_{p,1}$ can be translated mathematically into the following optimization:

$$\{\Phi_m^{(i)}(k)\}_{m \in \mathcal{L}_p} = \arg \min_{\Phi_m(k)} \sum_{m \in \mathcal{L}_p} \sum_k \left| \Phi_m(k) - \Psi_m^{(i)}(k) \right|^2, \text{s.t.} \{\Phi_m(k)\}_{m \in \mathcal{L}_p} \in \mathcal{C}_{p,1}.$$

This difficulty of the optimization lies in the total intensity constraint on the inverse Fourier transforms, which couples different auxiliary functions $m \in \mathcal{L}_p$. $\in$ Fortunately, because of the unitary nature of Fourier transform, it is obvious that the objective function can be equivalently transformed into the real space as:

$$\{\phi_m^{(i)}(r)\}_{m \in \mathcal{L}_p} = \arg \min_{\phi_m(r)} \sum_{m \in \mathcal{L}_p} \sum_r \left| \phi_m(r) - \psi_m^{(i)}(r) \right|^2, \text{s.t.} \hat{I}_p(r) = \sum_{m \in \mathcal{L}_p} |\phi_m(r)|^2,$$

where $\phi_m^{(i)}(r)$ and $\psi_m^{(i)}(r)$ are the real domain variables corresponding to $\Phi_m^{(i)}(k)$ and $\Psi_m^{(i)}(k)$. The merit of viewing the optimization in the real space is that the optimization now becomes completely separable in the pixel r, which can be simplified as:

$$\left\{\phi_m^{(i)}(r)\right\}_{m\in\mathcal{L}_p} = \arg\min_{\phi_m(r)} \sum_{m\in\mathcal{L}_p} \left|\phi_m(r) - \psi_m^{(i)}(r)\right|^2, \text{s.t.} \hat{I}_p(r) = \sum_{m\in\mathcal{L}_p} |\phi_m(r)|^2,$$

Therefore, the optimization can be solved via the Lagrangian multiplier method by incorporating the constraint into the Lagrangian with a multiplier $\lambda$:

$$\left\{\phi_m^{(i)}(r), \lambda^{\hat{a}}\right\}_{m\in\mathcal{L}_p} = \arg\min_{\phi_m(r),\lambda} \sum_{m\in\mathcal{L}_p} \left|\phi_m(r) - \psi_m^{(i)}(r)\right|^2 + \lambda\left(\hat{I}_p(r) - \sum_{m\in\mathcal{L}_p} |\phi_m(r)|^2\right).$$

By setting the derivatives with respect to $\lambda$ and $\Phi_m(r)$ for $m \in \mathcal{L}_p$ $\in$ to zero, the solutions for each auxiliary function in the set $m \in \mathcal{L}_p$ $\in$ in this projection step are:

$$\phi_m^{(i)}(r) = \sqrt{\frac{\hat{I}_p(r)}{\sum_{m\in\mathcal{L}_p}\left|\psi_m^{(i)}(r)\right|^2}} \psi_m^{(i)}(r), \quad m \in \mathcal{L}_p.$$

Therefore finally, the resulting solution for the intermediate variable in the frequency domain can be directly obtained by: $\Phi_m^{(i)}(k) = \mathcal{F}_{\left[\phi_m^{(i)}(r)\right]}^{-1}(k),$ where $\mathcal{F}_{[(\cdot)]}^{-1}(k)$ is the inverse Fourier transform.

This resembles the classic Gerchberg-Saxton update in phase retrieval by forcing an identical intensity $\hat{I}_p(r)/\sum_{m\in\mathcal{L}_p} |\psi_m^{(i)}(r)|^2$ for each auxiliary function.

2. Projection onto Set $\mathcal{C}_{p,2}$ : The projection onto set $\mathcal{C}_{p,2}$ can be equivalently obtained by solving for $0^{(i+1)}(k)$ and $P^{(i+1)}(k)$ separately and updating the auxiliary function as the product of the two:

$$\Psi_m^{(i+1)}(k) = O^{(i+1)}(k - k_m)P^{(i+1)}(k), \forall m \in \mathcal{L}_p$$

$$\left\{O^{(i+1)}(k), P^{(i+1)}(k)\right\} = \arg\min_{O(k),P(k)} \sum_{m\in\mathcal{L}_p} \sum_k \left|O(k - k_m)P(k) - \Phi_m^{(i)}(k)\right|^2.$$

This optimization is clearly separable in k (but not in m), which can be simplified as

$$\left\{O^{(i+1)}(k), P^{(i+1)}(k)\right\} = \arg\min_{O(k),P(k)} \sum_{m\in\mathcal{L}_p} \left|O(k - k_m)P(k) - \Phi_m^{(i)}(k)\right|^2.$$

The gradients of the objective function $f(O(k - k_m), P(k)) \triangleq$

$$\sum_{m\in\mathcal{L}_p} |O(k - k_m)P(k) - \Phi_m^{(i)}(k)|^2$$

can be obtained as:

$$\frac{\partial f(O(k-k_m), P(k))}{\partial O(k-k_m)} = 2 \sum_{m \in \mathcal{L}_p} \left[ O(k-k_m)P(k) - \Phi_m^{(i)}(k) \right] [P(k)]^*$$

$$\frac{\partial f(O(k-k_m), P(k))}{\partial P(k)} = 2 \sum_{m \in \mathcal{L}_p} \left[ O(k-k_m)P(k) - \Phi_m^{(i)}(k) \right] [O(k-k_m)]^*$$

By setting the derivatives with respect to O(k) and P(k) to zero, the optimality conditions are obtained that need to be satisfied by the updates $\{O^{(i+1)}(k), P^{(i+1)}(k)\}$:

$$O^{(i+1)}(k) = \frac{\sum_{m \in \mathcal{L}_p} \left[ P^{(i+1)}(k+k_m) \right]^* \Phi_m^{(i)}(k+k_m)}{\sum_{m \in \mathcal{L}_p} |P^{(i+1)}(k+k_m)|^2}$$

$$P^{(i+1)}(k) = \frac{\sum_{m \in \mathcal{L}_p} \left[ O^{(i+1)}(k-k_m) \right]^* \Phi_m^{(i)}(k)}{\sum_{m \in \mathcal{L}_p} |O^{(i+1)}(k-k_m)|^2}.$$

However, the updates depend on each other and hence cannot be obtained directly since they are both unknown. Therefore, instead of solving for the updates in one shot, we perform another numerical sub-optimization with sub-iteration indexed by $\ell$ to numerically obtain the pair of updates $\{O^{(i+1)}(k), P^{(i+1)}(k)\}$. For this sub-optimization, we choose to use Newton's method (i.e., second order), which further requires the computation of the second order derivative of the objective function:

$$\frac{\partial^2 f(O(k-k_m), P(k))}{\partial O(k-k_m)^2} = 2 \sum_{m \in \mathcal{L}_p} |P(k)|^2$$

$$\frac{\partial^2 f(O(k-k_m), P(k))}{\partial P(k)^2} = 2 \sum_{m \in \mathcal{L}_p} |O(k-k_m)|^2.$$

The updates by Newton methods are written below by evaluating the first and second order derivatives with the previous iterates $O^{(i,\ell)}(k)$ and $P^{(i,\ell)}(k)$:

$$O^{(i,\ell+1)}(k) = O^{(i,\ell)}(k) + \text{step} - \text{size} \cdot \left[ \frac{\partial^2 f(O(k-k_m), P(k))}{\partial O(k-k_m)^2} \right]^{-1} \frac{\partial f(O(k-k_m), P(k))}{\partial O(k)}$$

$$P^{(i,\ell+1)}(k) = P^{(i,\ell)}(k) + \text{step} - \text{size} \cdot \left[ \frac{\partial^2 f(O(k-k_m), P(k))}{\partial P(k)^2} \right]^{-1} \frac{\partial f(O(k-k_m), P(k))}{\partial P(k)}.$$

Generally speaking, Newton methods are preferred in non-linear least squares problems (precisely our formulation) due to their fast convergence and stability compared with first order methods such as gradient descents. Furthermore, we employ the Levenberg-Marquardt algorithm, which is a variant of the Gauss-Newton algorithm by superimposing a constant δ to the second order derivative, to avoid the singularity of possible zeros in the denominator. Here for the stability concerns, we also impose a constant on the second order derivative in the Newton's method, which is equivalent to introducing an $\ell_2$-norm regularization on O(k) and P(k). Let the $\ell^{th}$ sub-iterate pair be $\{O^{(i,\ell)}(k), P^{(i,\ell)}(k)\}$, then the Levenberg-Marquardt version of the Newton's algorithm updates can be computed with step-sizes $\alpha^{(i,\ell)}(k)$ and $\beta^{(i,\ell)}(k)$ as

$$O^{(i,\ell+1)}(k) = O^{(i,\ell)}(k) + \frac{\alpha^{(i,\ell)}(k+k_m)}{\sum_{m\in\mathcal{L}_p}|P^{(i,\ell)}(k+k_m)|^2+\delta_1}$$

$$\times \sum_{m\in\mathcal{L}_p}\left[P^{(i,\ell)}(k+k_m)\right]^*\left[\Phi_m^{(i)}(k+k_m) - O^{(i,\ell)}(k)P^{(i,\ell)}(k+k_m)\right]$$

$$P^{(i,\ell+1)}(k) = P^{(i,\ell)}(k) + \frac{\beta^{(i,\ell)}(k)}{\sum_{m\in\mathcal{L}_p}|O^{(i,\ell)}(k-k_m)|^2+\delta_2}$$

$$\times \sum_{m\in\mathcal{L}_p}\left[O^{(i,\ell)}(k-k_m)\right]^*\left[\Phi_m^{(i)}(k) - O^{(i,\ell)}(k-k_m)P^{(i,\ell)}(k)\right].$$

For simplicity, the step-sizes can be chosen as constants $\alpha^{(i,\ell)}(k) = \alpha$ and $\beta^{(i,\ell)}(k) = \beta$ for all k and all iterations. Then finally, after L passes of the Levenberg-Marquardt updates, the final updates of $\{O^{(i+1)}(k), P^{(i+1)}(k)\}$ are obtained as $\{O^{(i+1)}(k), P^{(i+1)}(k)\} = \{O^{(i,L)}(k), P^{(i,L)}(k)\}$.

Referring now to Block 140 of FIG. 2, a non-random illumination scheme can be selected and implemented in suitable settings. In one embodiment, a multiplexed coded illumination and a simplified reconstruction algorithm suited for this method is provided with high resolution intensity and phase reconstruction up to 2x the diffraction limit of a microscope objective lens.

The preferred non-random illumination scheme is a differential phase contrast (DPC) scheme. DPC is a quantitative phase imaging technique that measures a phase derivative of a sample by taking a pair of images from complementary asymmetric illumination patterns. Distinct from coherent techniques, DPC relies on partially coherent illumination, providing $2\times$ better lateral resolution, better optical sectioning, and immunity to speckle noise. The scheme preferably uses a weak object transfer function (WOTF) to quantify how the sample's phase information is converted into the DPC measurements and a quantitative phase reconstruction method that is robust to noise.

Because phase reconstructions from single-axis DPC measurements suffer from missing frequencies along the axis of asymmetry, DPC measurements along multiple axes are used to measure the missing frequency information. Here, the whole dataset consists of one or multiple sets of image pairs, in which each pair of images is taken from a complementary pair of illumination patterns. In each set of image pairs, the first image is taken by turning on multiple LEDs on one side of the axis of asymmetry, denoted as $I_L$, the second image is taken by turning the complementary illumination pattern on the other side of the axis of asymmetry, denoted as $I_R$. Examples of such illumination pairs includes a pair of 'D-shaped' patterns with arbitrary radius, a pair of pie shaped patterns with arbitrary subtending angles, a pair of half annulus shapes with arbitrary inner and outer radii, and a pair of arch-shaped patterns with arbitrary inner and outer radii, and subtending angles. Each image pair is combined to form the DPC image $I_n^{DPC}$ by the following equation:

$$I_n^{DPC} = (I_L - I_R)/(I_L + I_R)$$

where n = 1,2, ... N denotes the index of image pairs, and the whole dataset contains N sets of image pairs. The intensity reconstruction is simply: $I_{BF} = I_L + I_R$.

The phase reconstruction algorithm is as follows:

The phase of the unknown object $\Phi$ is related to the DPC image by:

$$I_n^{DPC} = \mathcal{F}^{-1}\{H(u) \cdot \mathcal{F}\{\phi\}\},$$

where $\mathcal{F}\{\cdot\}$ and $\mathcal{F}^{-1}\{\cdot\}$ are the 2D Fourier and inverse Fourier transforms. The phase transfer function H(u) is precalculated based on the LED illumination pattern by:

$$H(u) =$$

$$\int (S_L(u') - S_R(u'))P^*(u')P(u' + u)du' - \int (S_L(u') - S_R(u'))P^*(u')P(u' - u)du',$$

where $S_L$ and $S_R$ are the the pair of LED illumination patterns, $P(u)$ is a system quantity of the microscope, known as pupil function, and can be approximated as a circular function whose radius is set by the NA.
Then, the phase reconstruction is done by the following equation:

$$\phi = \mathcal{F}^{-1}\left\{\frac{\sum_n H^*(u) \cdot \mathcal{F}\{I_n^{DPC}\}}{\sum_n |H(u)|^2 + \alpha}\right\},$$

where $\alpha$ is a constant that needs to be tuned experimentally.

The main limitation with in vitro applications is the long acquisition times, which causes motion blur. Not only are hundreds of images captured for each reconstruction, but also long exposure times are needed due to the large intensity fall off at high angles. A fast acquisition method for in vitro imaging with both high spatial and temporal resolution over a wide field of view is provided at block 150.

The multiplexed coded illumination and reconstruction algorithm that is applied at Block 150 is a combination of the non-random scheme of block 140 and the random scheme of block 130. It provides high resolution intensity and phase reconstruction to several times (at least 2x) of the diffraction limit of the microscope objective lens. Here, the acquisition speed is improved by several orders of magnitude by reducing both capture time for each image and total number of images required.

Tilted illumination shifts the sample's spectrum in Fourier space, with the objective aperture selecting out different regions. Thus, by scanning through different angles, information about many regions of the Fourier space is captured. Although the spatial resolution of each measurement is poor, the images collected with high illumination angles (dark field) contain sub-resolution information. The information can be computationally combined in post-processing to achieve a resolution beyond the diffraction limit of the objective - up to the sum of the objective and illumination numerical apertures (NA).

In this case, the data is collected using two kinds of illumination patterns. First, a few sets (typically 2 or 4 for real-time application) of image pairs are obtained according to the differential phase contrast (DPC) methods described at block 140 above. The numerical aperture (NA) of the objective lens (which is a known quantity given an objective lens) defines a special radius on the LED array plane.

Next, the rest of the images are taken with one or multiple LEDs outside of this radius that are turned on randomly using the methods described at block 130 of FIG. 2 until all of the LEDs are covered. Specifically, these images can be taken by either sequentially turning each LED for an image or by turning on multiple selected LEDs for each image.

The reconstruction algorithm also combines the two algorithms in these two methods. First, an initial reconstruction of the intensity and phase is constructed by following the procedure described at block 140 of FIG. 2. Next, the reconstruction algorithm that is described at block 130 is applied to further refine the reconstruction results.

3D imaging techniques are crucial for thick samples and in situ studies; however, high speed acquisition with high resolution remains a challenging task. At block 160, an illumination scheme and reconstruction algorithm is provided to achieve 3D wide field of view and high resolution imaging, using the same data captured from the illumination methods at block 130. As the random, non-random and combined reconstruction methods can only apply to a 2D thin object, a method that can account for the 3D effects is needed, especially for biomedical applications.

At block 160, only a single intensity image is captured for each angle in this scheme. This is possible because data with angular diversity provides both 3D information and phase contrast. The 2D phase of thin samples can be computed from images taken at multiple illumination angles because of asymmetry introduced in the pupil plane. All of these approaches assume a thin sample. In thick samples, angle-dependent data usually represents tomographic information. Here, instead of choosing between either 2D phase imaging of thin samples or 3D recovery of thick samples, the methods achieve both.

By placing the LED array sufficiently far above the sample so that the illumination is considered spatially coherent, we can treat every LED's illumination as a plane wave from a unique angle. Sequentially turning on each LED in the 2D array, while capturing images, therefore builds up a 4D dataset of two spatial and two angular variables, similar to a light field measurement.

For 3D samples, light field refocusing is intuitively understood as a compensation for the geometric shift that occurs upon propagation. Off-axis illumination causes the intensity to shift from its original position in the plane of focus

by a distance $\Delta x = x_i(\Delta z/z_i)$. With higher angles or larger $\Delta z$, the rays shift further across the plane. The slope of the line created by each feature is determined by its depth, while the x location is defined by its $\theta_x = 0$ crossing. The light field refocusing routine undoes the shift and sums over all angles to synthesize the intensity image.

However, diffraction and phase effects can cause the light to deviate from the straight lines that are predicted by geometrical optics. While light field refocusing corrects for geometric shifts, additional wave-optical effects degrade the resolution with defocus. The algorithm starts from the light field refocused result, which captures most of the energy redistribution. We then iteratively estimate phase and diffraction effects. To achieve resolution beyond the diffraction limit of the objective, dark field illumination from LEDs at high angles is needed. For thin samples, each illumination angle shifts the sample spectrum around in Fourier space, with the objective aperture selecting out different sections. Thus, by scanning through different angles, many sections of Fourier space are captured. These can be stitched together with synthetic aperture approaches to create a high-resolution image in real space. The caveat is that phase is required, which the Fourier ptychography algorithm provides by performing translational diversity phase retrieval in Fourier space.

When the sample is thick, each angle of illumination takes a different path through the sample. Thus, the Fourier spectrum of each illumination angle's exit field is different, but all of these data are interrelated by the multi-slice model which we use here. Combining many angle-dependent low resolution images can therefore still achieve enhanced resolution at all slices, limited by the sum of the illumination and objective NAs.

A multi-slice forward model for image reconstruction at block 170 assumes that illumination from the n LED is a tilted plane wave $f_1^{(n)}(r) = \exp(2\pi u_n \cdot r)$, where spatial frequency is related to illumination angle by $u_n = (\sin\theta_{x,n}/\lambda, \sin\theta_{y,n}/\lambda)$ and $\lambda$ is wavelength. The field propagating through the thick sample is modeled by a multi-slice approximation which splits the 3D sample into a series of N thin slices, each having a complex transmittance function $o_m(r)$ ($m = 1, 2, ..., N$), where $r = (x,y)$ denotes the lateral coordinates and m indexes the slices. As light passes through each slice, the field is first multiplied by the 2D transmittance function of that slice, then propagated to the next slice. The spacing between neighboring slices is modeled as a uniform medium (e.g. air) of thickness $\Delta z_m$. Thus, the field exiting the sample can be calculated using a series of multiply-and-propagate operations:

$$g_m^{(n)}(r) = o_m(r)f_m^{(n)}(r)$$

$$f_{m+1}^{(n)}(r) = _{\Delta z_m}\{g_m^{(n)}(r)\}$$

where the superscript and subscript denote the indices of the LED and the slice, respectively. f and g are the fields before and after each slice, respectively, and $_{\Delta z}\{\cdot\} = \mathcal{F}^{-1}\exp[-2\pi\Delta z\sqrt{1/\lambda^2 - |u|^2}]\mathcal{F}\{\cdot\}$ denotes propagation by a distance $\Delta z$, with $\mathcal{F}\{\cdot\}$ and $\mathcal{F}^{-1}\{\cdot\}$ being the 2D Fourier transform and its inverse, respectively. After passing through the thick sample, the exiting complex-field is then imaged to the camera plane of the microscope, a process which involves a low-pass filtering by the objectives pupil function. The Fourier spectrum of the field at the camera plane $C^{(n)}(u)$ is thus

$$C^{(n)}(u) = G^{(n)}(u)P(u)H(u),$$

where $G^{(n)}(u)$ denotes the spectrum of the exit field from the last slice, $P(u)$ the pupil function including aberrations, and the term: $H(u) = \exp(-2\pi\Delta z_N\sqrt{1/\lambda^2 - |u|^2})$ is an additional defocus term assuming the last slice is $\Delta z_N$ distance away from the actual focal plane. The final intensity image from the n LED illumination is:

$$I^{(n)}(r) = \left|\mathcal{F}\{C^{(n)}\}(r)\right|^2.$$

Using the multi-slice forward model, an iterative reconstruction routine is used which makes explicit use of the light field result as an initial guess. Light field refocusing predicts the intensity image $I_{\Delta z}$ at $\Delta z$ from the actual focal plane to be:

$$I_{\Delta z}(x, y) = \sum_n I^{(n)}\left(x - x_n\frac{\Delta z}{z_i}, y - y_n\frac{\Delta z}{z_i}\right),$$

where the coordinates of the n LED are defined by $(x_n, y_n)$. Our initial guess of the 2D transmittance function at the corresponding sample slice is then $o_{\Delta z}(x, y) = \sqrt{I_{\Delta z}(x, y)}$.

The estimate for the sample's intensity and phase at each slice, as well as an estimate of the pupil function aberrations, are improved by an iterative Fourier Ptychography reconstruction process, combined with a multi-slice inversion procedure.

The reconstruction procedure aims to minimize the difference between the actual and estimated intensity measurements in a least squares sense:

$$\min_{\{o_m(r)\},P(u)} \sum_n \sum_r \left| I^{(n)}(r) - \left|\mathcal{F}\{C^{(n)}\}(r)\right|^2\right|^2.$$

At each iteration, the sample's transmittance function is updated for each illumination angle as follows:

(1) Starting from the current guess of the multi-slice transmittance function, our forward model is used to generate the current estimate of the Fourier spectrum of the field at the camera plane $C^{(n)}(u)$ when illuminating with the n LED.

(2) $C^{(n)}(u)$ is updated by replacing the estimated intensity with the actual measurement:

$$\hat{C}^{(n)}(u) = \mathcal{F}^{-1}\left\{\sqrt{I^{(n)}}\frac{\mathcal{F}\{C^{(n)}\}}{|\mathcal{F}\{C^{(n)}\}|}\right\}, \text{ where } \hat{\cdot} \text{ denotes an updated variable.}$$

(3) The exit field's spectrum and pupil function are updated:

$$\hat{G}^{(n)}(u) = \left(G^{(n)}, P, C^{(n)}/H, \hat{C}^{(n)}/H\right),$$

$$\hat{P}(u) = \left(P, G^{(n)}, C^{(n)}/H, \hat{C}^{(n)}/H\right).$$

Since the two functions come as a product, a gradient descent procedure is used, described by ??, to separate the two updates. The procedure is general for updating any $\hat{\psi}$ from the product of its previous estimate $\psi$ with another function $\Phi$, for example $\beta = \psi\Phi$:

$$\hat{\psi} = (\psi, \phi, \beta, \hat{\beta}) = \psi + \frac{|\phi|\phi^*(\hat{\beta}-\beta)}{|\phi|_{max}\cdot(|\phi|^2+\delta)}$$

where $\delta$ is a regularization constant to ensure numerical stability. The updated exit field $\hat{g}_N^{(n)}$ is then:

$$\hat{g}_N^{(n)}(r) = \mathcal{F}^{-1}\{\hat{G}^{(n)}\}(r).$$

(4) The field is back-propagated through the 3D sample, and the following steps are repeated until the 1st slice. At the m slice, the transmittance function $o_m^{(n)}$ and the incident field $f_m^{(n)}$ of this slice are updated using the same procedure as (11):

$$\hat{o}_m^{(n)}(r) = \left(o_m^{(n)}(r), f_m^{(n)}(r), g_m^{(n)}(r), \hat{g}_m^{(n)}(r)\right),$$

$$\hat{f}_m^{(n)}(r) = \left( f_m^{(n)}(r), o_m^{(n)}(r), g_m^{(n)}(r), \hat{g}_m^{(n)}(r) \right).$$

The updated exit field of the previous slice $\hat{g}_{m-1}^{(n)}$ is related to $\hat{f}_m^{(n)}$ by back-propagation:

$$\hat{g}_{m-1}^{(n)}(r) =_{-\Delta z_{m-1}} \{\hat{f}_m^{(n)}(r)\}.$$

(5) At the 1st slice, the incident field is kept unchanged as the original illumination: $\hat{f}_1^{(n)}(r) = f_1^{(n)}(r).$

After looping through the images from each of the LEDs, the convergence of the current sample estimate is checked by computing the mean squared difference between the measured and estimated intensity images from each angle. The algorithm converges reliably within only a few iterations in all cases tested.

Though iterative methods like the one used here can get stuck in local minima, the close initial guess provided by the light field result helps to avoid this problem. Further, the data contains significant redundancy (4D data for 3D reconstruction) and diversity (from angular variation), providing a highly constrained solution space. Thus, when the estimate correctly predicts the captured data and returns a good convergence criteria, one can be confident that the result is correct.

For data taken by turning on multiple LEDs, as they contain the same Fourier space information as the single-LED case detailed at block 130, the 3D reconstruction can be achieved in one embodiment by first using the method in block 130 to separate contributions from each of the LEDs, and then using the 3D reconstruction method at block 160.

The immediate application for the underlying technology is to extend the Fourier ptychography to 3D real-time wide field, high resolution microscopy. This is achieved with an LED array illuminator and computational algorithms, which could be implemented in all brightfield research and general purpose microscopes. Potential applications include whole slide imaging including 3D digital pathology, hematology, immunohistochemistry and neuroanatomy, as well as 3D in vitro live cell imaging including drug discovery, live cell mass profiling, disease diagnosis, cancer cell biology and stem cell research.

The technology described herein may be better understood with reference to the accompanying examples, which are intended for purposes of illustration only and should not be construed as in any sense limiting the scope of the technology described herein as defined in the claims appended hereto.

Example 1

In order to demonstrate a random multiplexed illumination strategy, where multiple randomly selected LEDs are turned on for each image, an apparatus as schematically shown in FIG. 1 with a programmable LED array was assembled. All samples were imaged with a $4\times$ 0.1NA objective and a scientific CMOS camera. A programmable $32\times32$ LED array (Adafruit, 4mm spacing, controlled by an Arduino) was placed at 67.5mm above the sample to replace the light source on a Nikon TE300 inverted microscope. The central 293 red (central wavelength 629 nm and 20 nm bandwidth) LEDs were used resulting in a final synthetic NA of 0.6. In principle, the LED array could provide larger NA improvements, but it is practically limited by noise in the dark field images from high angle LEDs.

Since each LED corresponds to a different area of Fourier space, the total number of images can be significantly reduced, without sacrificing image quality. The method was demonstrated experimentally in a modified commercial microscope. Compared to sequential scanning, the random multiplexed strategy achieved similar results with approximately an order of magnitude reduction in both acquisition time and data capture requirements. The multiplexed illumination scheme is capable of reducing both acquisition time and the number of images required by orders of magnitude.

Two different multiplexing schemes were demonstrated in which multiple LEDs from the array were turned on for each captured image. In the first scheme, the same number of images are obtained as in a sequential scan, but the exposure time for each is reduced, since turning on more LEDs provides more light throughput. As long as the random patterns are linearly independent, the resulting images can be interpreted as a linear combination of images from each of the LEDs, implying that the data contains the same information as in the sequential scan.

In the second multiplexing scheme, the total number of images were substantially reduced. In this second scheme, a random coding strategy is applied that is capable of significantly reducing the data requirements, since each image now contains information from multiple areas of the sample's Fourier space. To solve the inverse problem, we develop a modified Fourier Ptychography algorithm that applies to both multiplexing situations.

For comparison, recovered high-resolution images were obtained under three different coding strategies. The first strategy was sequential scanning of a single LED across the full array, taken with a 2s exposure time, resulting in a total acquisition time of T=586s. The coding matrix for sequential scanning is written as the $N_{LED} \times N_{LED}$ identity matrix. Next, a random multiplexed illumination with 4 LEDs on for each image (i.e. M = 4) and a shorter exposure time (1s) was used. The reconstruction result with the same number of images as the sequential scan $N_{img}$ = 293 was obtained. As expected, the same resolution enhancement is achieved with half the acquisition time. Finally, the partial measurement scheme in which the total number of images is reduced by a factor of 4 was evaluated. This procedure cut the number of images used in the reconstruction to 74 and the total time to 74s, without sacrificing the quality of the result.

The same multiplexing illumination scheme was also tested on a stained biological sample. Amplitude and phase reconstructions from sequential FP with $N_{img}$ = 293 single LED images and a total acquisition time of T=586s were produced. During post-processing, the final image was computed in 200×200 pixel patches. The background is estimated for each dark field image by taking the average intensity from a uniform region of the sample. FP reconstructions are compared with the different illumination schemes. The sequential scan is the same as previously used, but the multiplexed measurement now uses 8 LEDs (i.e. M = 8). The reduced measurement is demonstrated in the second case with only 40 images used, corresponding to approximately 1/8 of the data size in a full sequential scan, and reducing the total acquisition time by a factor of 14.7.

By exploiting illumination multiplexing, it was demonstrated that both the acquisition time and the data size requirements in Fourier Ptychography could be significantly reduced. An approximately 2 mm field of view with a 0.5 $\mu$m resolution was achieved, with data acquisition times reduced from ~10 minutes (for sequential scanning) to less than 1 minute. The data capture was reduced from 293 images to only 40 images.

One reason that the number of images that are taken can be reduced with the multiplexing scheme (vs. sequential capture) is that each image contains information from multiple non-overlapping areas of Fourier space. Due to the nonlinear nature of the reconstruction algorithm, convergence of the algorithm may be difficult to optimize for a given coding strategy. The illumination patterns used in the procedure follow a random coding scheme that successfully reduced the required number of images. Since light from different LEDs are mutually incoherent, illuminating with multiple LEDs means that each image has reduced spatial coherence. Thus, the diffraction fringes which often cause high dynamic range variations are smoothed out due to the reduced coherence.

Example 2

To demonstrate the non-random illumination methods, an LED array microscope with a 32×32 custom-made LED array (4 mm spacing, central wavelength 513 nm with 20 nm bandwidth) placed 63 mm above the sample was used to replace the microscope's standard illumination unit. The LED array was controlled by an ARM microcontroller and synchronized with the camera to switch the LED patterns at camera-limited speed. The camera operated at 50 Hz with full-frame (2160 × 2560) 16 bit images allowing single-axis DPC measurements at 25 Hz. Example images all used Hela cell samples imaged by a 20× 0.4 NA objective.

The phase transfer function can be tuned by using different illumination patterns. DPC is commonly implemented with half-circle shape illumination patterns. DPC requires illumination from high angles for good phase recovery at all spatial frequencies. As the illumination NA increases (measured by the coherence parameter $\sigma$), additional low spatial frequency and high spatial frequency phase information is captured. When a half-circle source with $\sigma \leq 1$ is used, spatial frequencies below $(1 - \sigma)NA_{obj}/\lambda$ and above $(1 + \sigma)NA_{obj}/\lambda$ are missing.

It has been shown that phase reconstructions from a single-axis are fundamentally limited by the missing frequencies along the axis of asymmetry. Single-axis DPC with Top-Bottom source asymmetry results in missing vertical features, while Left-Right source asymmetry results in missing horizontal features.

Combining DPC measurements along two different axes eliminates the missing frequencies and thus improves the phase reconstruction. However, as more angles are added, the transfer function changes only marginally. The combined phase transfer function for 12 equally spaced DPC measurements (i.e. at every 15 °) is almost circularly symmetric, which provides only slight improvement in the phase reconstruction over the 2-axis result. As a result, DPC measurements from two orthogonal axes provide the best trade-off between phase reconstruction accuracy over acquisition speed.

Additionally, the phase transfer function captures spatial frequencies up to twice the NA of the objective when we use a half-circle source with $\sigma \geq 1$. Interestingly, DPC with half-annular source provides improved contrast for low frequency features, maintaining the maximum partially coherent bandlimit without sacrificing high spatial frequency response.

Accordingly, the 2D transfer function analysis and quantitative phase reconstruction method was confirmed for differential phase contrast using partially coherent asymmetric illumination. Images are captured in an LED array microscope, which is particularly attractive for commercial microscopy, since it can achieve illumination pattern switching at camera-limited speeds. The method is also label-free and stain-free, so has application in biological imaging of live samples. This phase transfer function analysis and reconstruction technique may also find use in its application to alternative DPC architectures based on split-detectors.

Example 3

To further demonstrate the operational principles of the methods, a system of an inverted microscope with a programmable 32 x 32 individually addressable LED array to pattern illumination angles was assembled.

All LEDs were driven statically using 64 LED controller chips (MBI5041) to provide an independent drive channel for each LED. A controller unit based on the ARM 32-bit Cortex M3 CPU provides the logical control for the LED array by the I2C interface at 5 MHz. The LED pattern transfer time is about 320 $\mu$s. A standard stage-mounted incubator was used for imaging live cell samples in a petri dish.

For specimens, HeLa cells, Human osteosarcoma epithelial (U2OS) cells and human mammary epithelial (MCF10A) cells were cultured with DMEM (Dulbeccos Modified Eagles Medium) supplemented with 10% FBS (fetal bovine serum), Glutamine and penicillin/streptomycin. The cells were plated on p75 flasks and cultured in 37 degree incubator with 5% $CO_2$.

The random, non-random and combined illumination strategies were implemented and compared in terms of space, bandwidth and acquisition time. DPC uses only 4 images, providing resolution out to 2x the objective's NA and excellent temporal resolution. Here, two different objectives (4x and 20x) were used for different situations, in order to trade off field of view and resolution within the limited space-bandwidth product (SBP). Sequential FPM scans through each LED, achieving both wide field of view and high resolution, at the cost of speed. Fast FPM implements a hybrid of DPC and 8-LED multiplexing in order to achieve the same SBP as sequential FPM, with sub-second acquisition time.

Illumination and image reconstruction and can be described in two steps. In the first step, a low resolution initialization based on DPC is calculated. In the second step, an iterative reconstruction procedure was implemented to include the higher order scattering and dark field contributions. For sequential FPM, the 4 images required by DPC are first numerically constructed by taking the sum of single-LED images corresponding to the left, right, top, bottom half-circles on the LED array, respectively. Next, the deconvolution-based DPC reconstruction algorithm was used to calculate phase within a 2x objective's NA. For Fast Fourier ptychographic microscopy, the 4 brightfield images are directly used in DPC reconstruction. In both cases, the initial low resolution intensity image is calculated by the average of all brightfield images corrected by the intensity falloffs and then deconvolved by the absorption transfer function.

During the reconstruction, each full FOV raw image (2560×2160 pixels) is divided into 6×5 small sub-regions (560×560 pixels), with 160-pixel overlap on each sides for the neighboring sub-regions. Each set of images were then processed by our FPM algorithm to create a high resolution complex-valued reconstruction having both intensity and phase (2800×2800 pixels). Finally, all high resolution reconstructions were combined using the alpha-blending stitching method to create the full FOV high resolution reconstruction.

Image segmentation was performed by using Cellprofiler. The software performs a series of operations including threshold, watershed, and labeling to return a 2D map from each frame of phase reconstruction containing segmented regions, representing different cells. The 2D maps are then loaded into Matlab to extract the phase value within each individual cell of interest. The total dry mass for each cell was then calculated as the surface integral of the dry mass density.

$$\rho = \frac{\lambda}{2\pi\gamma}\varphi \,,$$

The dry mass density $\rho$ is related to the phase $\varphi$ by where $\lambda$ is the center wavelength and $\gamma$ = 0.2 m L/g is the average reported values for refractive increment of protein. The background fluctuations are characterized from a region without any cells and having an area similar to the average cell size. A standard deviation of 1.5pg in units of dry mass was achieved, indicating good stability of the phase measurement.

Since the Fast FPM method exploits multiplexing to reduce the number of images needed, it is possible to capture longer video sequences without incurring data management issues. Hence, videos of both fast-scale dynamics and slow-scale evolution of NSCs with details both on the sub-cellular level and across the entire cell population can be created.

FPM reconstructions for human osteosarcoma epithelial (U2OS) cells, before and after staining were compared. With staining, the cell features were easily discerned in both the intensity and phase reconstructions, achieving a 0.7 NA resolution across a 4x FOV. A conventional (small FOV) brightfield image captured with a 40x (0.65 NA) objective and spatially coherent illumination was used for comparison. Although the stained sample can be visualized with intensity, it still contains phase effects, proportional to the shape and density of the cells. In the unstained case, the intensity images contained very little contrast.

Time-lapse videos of human cervical adenocarcinoma epithelial (HeLa) cell division process were taken over the course of 4 hours. This data was captured using the sequential FPM methods (173 images) with upgraded hardware, achieving a 0.8 NA resolution across a 4x FOV with 7 second acquisition time for each frame.

Videos of the reconstructed high SBP phase results of adult rat neural stem cells (NSC) that were also captured at sub-second acquisition speed (1.25 Hz) for fast dynamics and across long time scales (up to 4.5 hours) for slower evolutions. The result achieves the same SBP as in the previous section (0.8 NA resolution across a 4x FOV), but uses only 21 images, as opposed to 173. As a result, it is possible to significantly increase the maximum frame rate, from a capture time of 7 seconds down to just seconds, alleviating motion artifacts that would otherwise blur the result due to sub-cellular fast dynamics that happen on timescales shorter than 7 seconds.

The human mammary epithelial (MCF10A) cells exhibited the fastest dynamics observed, due to fluctuations of small fibers and vesicle transport events. The HeLa and NSCs used in previous sections tend to display somewhat slower sub-cellular dynamics and are more suited to the Fast FPM timescale procedure.

Using the sequential FPM method with 60 second capture time, almost no details about the fiber structures are retained. Even with a faster hardware setup, requiring only 7 seconds acquisition time, the fibers were also completely blurred out. By switching to the Fast FPM, it was possible to obtain the same SBP as the previous two schemes, but with only 0.8 seconds acquisition time. Now, fiber details and other moving structures become more discernible.

The flexibility of the system in trading off FOV, resolution and time means that procedures can be tailored to the sample motion and desired SBP. For most biological dynamics, a sub-second acquisition time is sufficient, and thus the Fast FPM design is a good choice for maximizing the space-bandwidth-time product without producing motion blur artifacts. However, when dynamics are on timescales faster than 0.8 seconds, one should reduce the number of images captured, either by sacrificing FOV (using a larger NA objective) or by reducing the resolution improvement factor (using a smaller range of LEDs). In the limit, one can eliminate all the dark field LED images and simply implement DPC.

Example 4

In order to further demonstrate the technology, the methods were adapted to 3D imaging techniques that can be used for studying thick samples and for in situ studies. The experimental setup included a $32 \times 32$ custom-made LED array (4mm spacing, central wavelength $\lambda$ = 643 nm with 20 nm bandwidth) placed $z_{LED}$ = 74 mm above the sample, replacing the microscope's standard illumination unit (Nikon TE300 inverted). The LED array was controlled by an ARM microcontroller and synchronized with the camera to scan through the LEDs at camera-limited speeds. The camera was capable of 100 frames per second at full frame (2560 $\times$ 2160 pixels) and with 16 bit data, though longer exposure times were used for dark field images. Thus, acquisition time can be easily traded off for image quality or resolution. Each LED has a d =120$\mu$m $\times$ 120$\mu$m square emitting area, resulting in an illumination coherence area of $A_c$ =400$\mu$m $\times$ 400$\mu$m (according to the van Cittert-Zernike theorem, $A_c = \lambda z_{LED}/d$). The image was reconstructed in patches that had an area smaller than the coherence area. The final full field of view reconstruction was obtained by stitching all patches together.

Initially, improvement over light field refocusing with a 10$\times$ objective (0.25 NA) was demonstrated using only the brightfield LEDs. This corresponds to a 69 LED circle at the center of our array. The two-slice test sample consisted of two resolution targets, one placed above the focal plane and the other placed below the focal plane and rotated relative to the first one. The reconstructions from light field refocusing and our multi-slice method with images captured from physical focus (with all the brightfield LEDs on) were compared. The resolution in the physically refocused images is 0.78$\mu$m, however the light field refocused image could not resolve such small features, due to diffraction blurring. Multi-slice reconstructions with a two-slice model, however, could recover diffraction-limited resolution at both depths, providing significant improvement over the light field refocused result.

Since this result represents the sample transmittance function, out-of-plane blur from the other resolution target was largely removed, unlike in physical focusing. In addition, the results had better high-frequency contrast. This was because the physically focused images were taken with all brightfield LEDs on, so the incoherent optical transfer function (OTF) implied a 2$\times$ larger frequency cutoff than the coherent case, but with decreased response at higher spatial frequencies. In our result, a coherent transfer function (CTF) is synthesized, which has a uniform frequency response within the passband.

Next, multi-slice Fourier Ptychography was demonstrated for obtaining resolution beyond the objective's diffraction limit by including dark field LEDs up to 0.41 illumination NA. To do this, to a 4$\times$ objective (0.1 NA) was used with the method to recover lateral resolution with an effective NA of 0.51 and a resolution of 0.69$\mu$m (5 times better NA than the objective), as expected. The added benefit is that the field-of-view (1.8mm $\times$ 2.1mm) of the 4$\times$ objective is bigger, resulting in a large volume reconstruction. The physically focused images demonstrated significant out-of-plane blur, since the small NA provides large depth of field (DoF). In comparison, the multi-slice reconstruction successfully mitigated most of this blur, resulting in a clean image at each depth.

Finally, the method was demonstrated on a continuous thick Spirogyra algae sample having both absorption and phase effects. The 10$\times$ objective (0.25 NA) with LEDs was used that provide a best possible lateral resolution of 0.59$\mu$m (Rayleigh criteria with effective NA 0.66). The sample had a total thickness of ~100$\mu$m, which was split up into 11 slices spaced by 10$\mu$m, representing a step size midway between the axial resolution of the objective and the predicted axial resolution. Though the sample is continuous through the entire depth range, the multi-slice method recovered slices that only contain parts of the sample within the axial resolution range around each corresponding depth.

Accordingly, the method for multi-slice 3D Fourier Ptychography that recovers 3D sample intensity and phase with resolution beyond the diffraction-limit of the microscope objective that was demonstrated. The method is label-free and stain-free and can have a wide application in biological imaging of live samples.

**Claims**

1. A method for Fourier ptychographic microscopy, the method comprising:

   providing a light emitting diode array microscope (12) with a programmable array (14) of light emitting diodes;
   illuminating (16) a sample (18) with a multiplexed sequence of illuminations of light emitting diodes in the array (14) wherein multiple light emitting diodes are turned on for each image, whereby the light emitting diodes that are used simultaneously to illuminate the sample during one image represent distinct, non-overlapping areas of Fourier space;
   acquiring images of the sample (18) from each illumination in the sequence, wherein the multiplexed sequence of illuminations generates images having an overlap;
   and
   reconstructing a final image from the acquired overlapping images.

2. The method as recited in claim 1, wherein said multiplexed sequence of illuminations comprises a differential phase contrast sequence; and uses groups of light emitting diodes of the array (14) having a shaped pattern selected from the group of shaped patterns consisting of a half-circular shape with arbitrary outer radii; a half-annulus shaped pattern with arbitrary inner and outer radii, an arch-shaped pattern with arbitrary inner and outer radii and subtending angles; and pie shaped patterns with arbitrary subtending angles.

3. The method as recited in claim 1, further comprising:
   illuminating (16) the sample (18) at angles of illumination greater than that allowed by the numerical aperture of an objective lens (22, 26) of said microscope (12) to produce darkfield images containing sub-resolution feature information.

4. The method as recited in claim 1, further comprising:

   acquiring 4D light field measurements; and
   recovering 3D intensity and phase data from the 4D light field measurements reconstuct a 3D image.

5. The method as recited in claim 1, the method comprising:

   Illuminating (16) the sample (18) at angles of illumination greater than that allowed by a numerical aperture of an objective lens (22, 26) of the microscope (12) to produce darkfield images;
   wherein said reconstructing a final image from the acquired images comprises:

      recovering 3D intensity and phase data; and
      reconstructing a final 3D image from the acquired images and 3D intensity and phase data.

6. The method as recited in claim 1 or 5, wherein said multiplexed sequence of illuminations comprises actuating multiple light emitting diodes selected randomly for each acquired image.

7. The method as recited in claim 6, further comprising:
   actuating individual randomly selected light emitting diodes in the array (14) only once in said sequence of light emitting diode illuminations.

8. The method as recited in claim 1 or 5, wherein said multiplexed sequence of illuminations comprises a differential phase contrast sequence.

9. The method as recited in claim 8, wherein said differential phase contrast sequence comprises an asymmetric actuation of groups of light emitting diodes at the top, bottom, left side and right side of the LED array (14); and wherein quantitative phase and intensity images within and beyond the numerical aperture of the objective lens are recovered.

**10.** The method as recited in claim 1 or 5, wherein said multiplexed sequence of illuminations comprises:

Illuminating (16) the sample (18) with a differential phase contrast sequence of illuminations; and
illuminating (16) the sample (18) with multiple randomly selected light emitting diodes of the array (14).

**11.** A system for performing Fourier ptychographic microscopy, comprising:

(a) a microscope (12) with a programmable light emitting diode array light source (14);
(b) a camera (30) configured to capture images from the microscope (12);
(c) a computer processor (32) operably coupled to the light emitting diode array (14) and the camera (30);
(d) a memory storing instructions executable on the computer processor (32), wherein when executed by the computer processor (32) said instructions perform steps comprising:

(i) controlling light emitting diodes in the array (14) and illumination (16) of a sample (18) with a multiplexed sequence of illuminations of light emitting diodes of the array (14) wherein multiple light emitting diodes are turned on for each image, whereby the light emitting diodes that are used simultaneously to illuminate the sample during one image represent distinct, non-overlapping areas of Fourier space;
(ii) acquiring images of the sample (18) from each illumination in the sequence, wherein the multiplexed sequence of illuminations generates images having an overlap; and
(iii) reconstructing a final image from the acquired overlapping images.

**12.** The system as recited in claim 11, wherein said multiplexed sequence of illuminations comprises actuating multiple randomly selected light emitting diodes for each acquired image.

**13.** The system as recited in claim 12, wherein said individual randomly selected light emitting diodes in the array (14) are actuated only once in said sequence of light emitting diode illuminations.

**14.** The system as recited in claim 11, wherein said multiplexed sequence of illuminations comprises a differential phase contrast sequence.

**15.** The system as recited in claim 11, wherein said multiplexed sequence of illuminations comprises:

illuminating (16) the sample (18) with a differential phase contrast sequence of illuminations; and
illuminating (16) the sample (18) with multiple randomly selected light emitting diode of the array (14).

**Patentansprüche**

**1.** Verfahren für die Fourier-Ptychografie, wobei das Verfahren folgendes umfasst:

Bereitstellen eines Leuchtdiodenarray-Mikroskops (12) mit einer programmierbaren Array (14) von Leuchtdioden;
Illuminieren (16) einer Probe (18) mit einer multiplexierten Sequenz von Illuminationen von Leuchtdioden in der Array (14), wobei mehrere Leuchtdioden für jedes Bild eingeschaltet werden, wobei die Leuchtdioden, die gleichzeitig zur Illumination der Probe während einem Bild verwendet werden, deutliche, sich nicht überlappende Bereiche des Fourierraums darstellen;
Erfassen von Bildern der Probe (18) von jeder Illumination in der Sequenz, wobei die multiplexierte Sequenz von Illuminationen Bilder mit einer Überlappung erzeugt; und
Rekonstruieren eines letztendlichen Bilds aus den erfassten sich überlappenden Bildern.

**2.** Verfahren nach Anspruch 1, wobei die multiplexierte Sequenz von Illuminationen eine differentielle Phasenkontrastsequenz umfasst und Gruppen von Leuchtdioden der Array (14) mit einem geformten Muster verwendet, das ausgewählt ist aus der Gruppe geformter Muster, die folgendes umfasst: eine halbkreisförmige Form mit willkürlichen äußeren Radien, ein halbringförmiges Muster mit willkürlichen inneren und äußeren Radien, ein bogenförmiges Muster mit willkürlichen inneren und äußeren Radien und gegenüberliegenden Winkeln und tortenförmige Muster mit willkürlichen gegenüberliegenden Winkeln.

3. Verfahren nach Anspruch 1, wobei das Verfahren ferner folgendes umfasst:
Illuminieren (16) der Probe (18) in Illuminationswinkeln, die größer sind als zulässig gemäß der numerischen Apertur einer Objektivlinse (22, 26) des Mikroskops (12), so dass Dunkelfeldbilder erzeugt werden, die Subauflösungs-Merkmalsinformationen enthalten.

4. Verfahren nach Anspruch 1, wobei dieses ferner folgendes umfasst:

Erfassen von 4D-Lichtfeldmessungen; und
Rückgewinnen von 3D-Intensitäts- und Phasendaten aus den 4D-Lichtfeldmessungen zur Rekonstruktion eines 3D-Bilds.

5. Verfahren nach Anspruch 1, wobei das Verfahren folgendes umfasst:

Illuminieren (16) der Probe (18) in Illuminationswinkeln, die größer sind als zulässig gemäß der numerischen Apertur einer Objektivlinse (22, 26) des Mikroskops (12), so dass Dunkelfeldbilder erzeugt werden;
wobei das Rekonstruieren eines letztendlichen Bilds aus den erfassten Bildern folgendes umfasst:

Rückgewinnen von 3D-Intensitäts- und Phasendaten; und
Rekonstruieren eines letztendlichen 3D-Bilds aus den erfassten Bildern und 3D-Intensitäts- und Phasendaten.

6. Verfahren nach Anspruch 1 oder 5, wobei die multiplexierte Sequenz von Illuminationen das Betätigen mehrerer Leuchtdioden umfasst, die willkürlich für jedes erfasste Bild ausgewählt werden.

7. Verfahren nach Anspruch 6, wobei dieses ferner folgendes umfasst:
Betätigen einzelner willkürlich ausgewählter Leuchtdioden in der Array (14) nur einmal in der Sequenz von Leuchtdiodenilluminationen.

8. Verfahren nach Anspruch 1 oder 5, wobei die multiplexierte Sequenz von Illuminationen eine differentielle Phasenkontrastsequenz umfasst.

9. Verfahren nach Anspruch 8, wobei die differentielle Phasenkontrastsequenz eine asymmetrische Betätigung von Gruppen von Leuchtdioden auf der Oberseite, der Unterseite, der linken Seite und der rechten Seite der LED-Array (14) umfasst; und wobei quantitative Phasen- und Intensitätsbilder innerhalb der numerischen Apertur der Objektivlinse und darüber hinaus wiedergewonnen werden.

10. Verfahren nach Anspruch 1 oder 5, wobei die multiplexierte Sequenz von Illuminationen folgendes umfasst:

Illuminieren (16) der Probe (18) mit einer differentiellen Phasenkontrastsequenz von Illuminationen; und
Illuminieren (16) der Probe (18) mit mehreren willkürlich ausgewählten Leuchtdioden der Array (14).

11. System für die Durchführung von Fourier-Ptychografie, wobei das System folgendes umfasst:

(a) ein Mikroskop (12) mit einer programmierbaren Leuchtdiodenarray-Lichtquelle (14);
(b) eine Kamera (30), die zur Erfassung von Bildern von dem Mikroskop (12) gestaltet ist;
(c) einen Computerprozessor (32), der funktionsfähig mit der Leuchtdiodenarray (14) und der Kamera (30) gekoppelt ist;
(d) einen Speicher, der an dem Computerprozessor (32) ausführbare Anweisungen speichert, wobei die Anweisungen, wenn sie durch den Computerprozessor (32) ausgeführt werden, die folgenden Schritte ausführen:

(i) Steuern der Leuchtdioden in der Array (14) und Illuminieren (16) einer Probe (18) mit einer multiplexierten Sequenz von Illuminationen von Leuchtdioden der Array (14), wobei mehrere Leuchtdioden für jedes Bild eingeschaltet werden, wobei die Leuchtdioden, die gleichzeitig zur Illumination der Probe während einem Bild verwendet werden, deutliche, sich nicht überlappende Bereiche des Fourierraums darstellen;
(ii) Erfassen von Bildern der Probe (18) von jeder Illumination in der Sequenz, wobei die multiplexierte Sequenz von Illuminationen Bilder mit einer Überlappung erzeugt; und

(iii) Rekonstruieren eines letztendlichen Bilds aus den erfassten sich überlappenden Bildern.

**12.** System nach Anspruch 11, wobei die multiplexierte Sequenz von Illuminationen das Betätigen mehrerer willkürlich ausgewählter Leuchtdioden für jedes erfasste Bild umfasst.

**13.** System nach Anspruch 12, wobei die einzeln willkürlich ausgewählten Leuchtdioden in der Array (14) nur einmal in der Sequenz von Leuchtdiodenilluminationen betätigt werden.

**14.** System nach Anspruch 11, wobei die multiplexierte Sequenz von Illuminationen eine differentielle Phasenkontrastsequenz umfasst.

**15.** System nach Anspruch 11, wobei die multiplexierte Sequenz von Illuminationen folgendes umfasst:

Illuminieren (16) der Probe (18) mit einer differentiellen Phasenkontrastsequenz von Illuminationen; und
Illuminieren (16) der Probe (18) mit mehreren willkürlich ausgewählten Leuchtdioden der Array (14).

**Revendications**

**1.** Procédé de microscopie ptychographique de Fourier, le procédé comprenant les étapes consistant à :

fournir un microscope à réseau de diodes électroluminescentes (12) avec un réseau programmable (14) de diodes électroluminescentes ;
éclairer (16) un échantillon (18) avec une séquence multiplexée d'éclairages de diodes électroluminescentes dans le réseau (14), plusieurs diodes électroluminescentes étant allumées pour chaque image, moyennant quoi les diodes électroluminescentes qui sont utilisées simultanément pour éclairer l'échantillon pendant d'une image représentent des zones distinctes, non chevauchantes, de l'espace de Fourier ;
acquérir des images de l'échantillon (18) à partir de chaque éclairage dans la séquence, la séquence multiplexée d'éclairages générant des images ayant un chevauchement ; et
reconstruire une image finale à partir des images chevauchantes acquises.

**2.** Procédé selon la revendication 1, ladite séquence multiplexée d'éclairages comprenant une séquence à contraste de phase différentielle ; et utilisant des groupes de diodes électroluminescentes du réseau (14) ayant un motif façonné choisi dans le groupe de motifs façonnés consistant en une forme semi-circulaire avec des rayons extérieurs arbitraires ; un motif façonné demi-annulaire avec des rayons intérieurs et extérieurs arbitraires, un motif façonné en arc avec des rayons intérieurs et extérieurs arbitraires et des angles de sous-tendance ; et des motifs façonnés en camembert avec des angles de sous-tendance arbitraires.

**3.** Procédé selon la revendication 1, comprenant en outre l'étape consistant à :
éclairer (16) l'échantillon (18) à des angles d'éclairage supérieurs à ceux permis par l'ouverture numérique d'une lentille d'objectif (22, 26) dudit microscope (12) pour produire des images en fond noir contenant des informations de caractéristiques de sous-résolution.

**4.** Procédé selon la revendication 1, comprenant en outre les étapes consistant à :

acquérir des mesures de champ lumineux 4D ; et
récupérer des données de phase et d'intensité 3D à partir des mesures du champ lumineux 4D ;
reconstruire une image 3D.

**5.** Procédé selon la revendication 1, le procédé comprenant l'étape consistant à :

éclairer (16) l'échantillon (18) à des angles d'éclairage supérieurs à ceux permis par une ouverture numérique d'une lentille d'objectif (22, 26) du microscope (12) pour produire des images en fond noir ;
ladite reconstruction d'une image finale à partir des images acquises comprenant les étapes consistant à :
récupérer des données de phase et d'intensité 3D ; et
reconstruire une image 3D finale à partir des images acquises et des données de phase et d'intensité 3D.

**6.** Procédé selon la revendication 1 ou 5, ladite séquence multiplexée d'éclairages comprenant l'étape consistant à actionner plusieurs diodes électroluminescentes sélectionnées aléatoirement pour chaque image acquise.

7. Procédé selon la revendication 6, comprenant en outre l'étape consistant à :
actionner des diodes électroluminescentes individuelles sélectionnées aléatoirement dans le réseau (14) une seule fois dans ladite séquence d'éclairage de diodes électroluminescentes.

8. Procédé selon la revendication 1 ou 5, ladite séquence multiplexée d'éclairages comprenant une séquence à contraste de phase différentielle.

9. Procédé selon la revendication 8, ladite séquence à contraste de phase différentielle comprenant un actionnement asymétrique de groupes de diodes électroluminescentes en haut, en bas, à gauche et à droite du réseau de DEL (14) ; et des images quantitatives de phase et d'intensité à l'intérieur et au-delà de l'ouverture numérique de la lentille d'objectif étant récupérées.

10. Procédé selon la revendication 1 ou 5, ladite séquence multiplexée d'éclairages comprenant les étapes consistant à :

éclairer (16) l'échantillon (18) avec une séquence à contraste de phase différentielle d'éclairages ; et
éclairer (16) l'échantillon (18) avec plusieurs diodes électroluminescentes sélectionnées aléatoirement du réseau (14).

11. Système pour effectuer une microscopie ptychographique de Fourier, comprenant :

(a) un microscope (12) avec une source de lumière à réseau de diodes électroluminescentes programmable (14) ;
(b) une caméra (30) conçue pour capter les images du microscope (12) ;
(c) un processeur informatique (32) accouplé fonctionnellement au réseau de diodes électroluminescentes (14) et à la caméra (30) ;
(d) une mémoire stockant des instructions exécutables sur le processeur de l'ordinateur (32), lorsqu'elles sont exécutées par le processeur de l'ordinateur (32), lesdites instructions exécutant des étapes consistant à ;

(i) commander les diodes électroluminescentes dans le réseau (14) et éclairer (16) un échantillon (18) avec une séquence multiplexée d'éclairages des diodes électroluminescentes du réseau (14) plusieurs diodes électroluminescentes étant allumées pour chaque image, moyennant quoi les diodes électroluminescentes qui sont utilisées simultanément pour éclairer l'échantillon pendant une image représentent des zones distinctes, non chevauchantes, de l'espace de Fourier ;
(ii) acquérir des images de l'échantillon (18) à partir de chaque éclairage dans la séquence, la séquence multiplexée d'éclairages générant des images ayant un chevauchement ; et
(iii) reconstruire une image finale à partir des images chevauchantes acquises.

12. Système selon la revendication 11, ladite séquence multiplexée d'éclairages comprenant l'actionnement de plusieurs diodes électroluminescentes sélectionnées aléatoirement pour chaque image acquise.

13. Système selon la revendication 12, lesdites diodes électroluminescentes individuelles sélectionnées aléatoirement dans le réseau (14) étant actionnées une seule fois dans ladite séquence d'éclairage de diodes électroluminescentes.

14. Système selon la revendication 11, ladite séquence multiplexée d'éclairages comprenant une séquence à contraste de phase différentielle.

15. Système selon la revendication 11, ladite séquence multiplexée d'éclairages comprenant :

l'éclairage (16) de l'échantillon (18) avec une séquence à contraste de phase différentielle d'éclairages ; et
l'éclairage (16) de l'échantillon (18) avec plusieurs diodes électroluminescentes sélectionnées aléatoirement du réseau (14).

FIG. 1

**FIG. 2**

**EP 3 146 501 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62000520

### Non-patent literature cited in the description

- **LEI TIAN.** 3D differential phase-contrast microscopy with computational illumination using an LED array. *Optics Letter,* 28 February 2014, vol. 39 (5), ISSN 0146-9592, 1326

- **SIYUAN DONG.** Spectral Multiplexing and Coherent-State Decomposition in Fourier Ptychographic Imaging. *Biomedical Optics Express,* 09 May 2014, vol. 5 (6), ISSN 2156-7085, 1757